# EUROPEAN PATENT APPLICATION

(11) **EP 1 333 674 A2**
(43) Date of publication of application: **06.08.2003**
(21) Application number: 03002176.0
(22) Date of filing: 03.02.2003
(51) Int. Cl.: H04N 5/913

(54) **Digital content management device and digital content management program**

(30) Priority: 04.02.2002 JP 2002027138
(71) Applicant: MATSUSHITA ELECTRIC INDUSTRIAL CO., LTD., Kadoma-shi, Osaka 571-8501 (JP)
(72) Inventor: Ito Yoshikatsu, Osaka-fu 573-1146 (JP); Murase Kaoru, Nara-ken 631-0804 (JP)
(74) Representative: Grünecker, Kinkeldey, Stockmair & Schwanhäusser Anwaltssozietät

(57) **Abstract**

When digital content is recorded, identification information for the digital content and a random number are recorded on each of a nonvolatile memory (110) and an internal HDD (104). When the digital content is moved from the internal HDD (104) to another recording medium (4), the random number recorded in the nonvolatile memory (110) and the random number recorded on the internal HDD (104) are compared to see if they match. Also, an offset value that indicates a location of a previous end-point at which the digital content has been ended to be read is read from the internal HDD (104), and the read offset value is compared with a location of a start-point at which the digital content is started to be read. If the random numbers match and the location of the start-point is greater than the offset value, the digital content is permitted to be moved.

## Description

### BACKGROUND OF THE INVENTION

### (1) Field of the Invention

The present invention relates to a digital content management device and a digital content management program for managing digital content to block its unauthorized use. In particular, the present invention relates to a technique for improving user convenience while blocking unauthorized use of the digital content.

### (2) Related Art

With the start of BS digital broadcasting, works such as movies have been distributed widely as digital content in recent years. Because digital content can be copied easily and also can be transferred readily via the Internet or other media, concerns are rising over piracy acts or redistribution of unauthorized copies of digital content. In response to these concerns, various techniques have been developed for protecting digital content.

One example of specifications relating to such techniques for protecting digital content is DTCP (Digital Transmission Content Protection). DTCP is a technique used in digitally transferring digital content, to block unauthorized copying by such methods as encrypting the digital content. According to the digital content protection technique like DTCP, CCI (Copy Control Information) that can be set to show "Copy No More", "Copy One Generation", and the like, is attached to digital content.

The CCI showing "Copy No More" indicates that copying of digital content is prohibited. The CCI showing "Copy One Generation" indicates that copying of digital content is permitted only once. Accordingly, when digital content with the CCI showing "Copy One Generation" is copied, digital content newly obtained by the copying is provided with the CCI showing "Copy No More".

Applying this digital content protection technique to devices such as digital video recorders is effective in blocking unauthorized copying of digital content.

### PROBLEMS TO BE SOLVED BY THE INVENTION

However, digital content whose CCI shows "Copy No More" may be required to be moved to another recording medium, like when the user wishes to copy such digital content with the CCI showing "Copy No More" recorded on an HDD (Hard Disk Drive) internally provided in a digital TV set, to a DVD-RAM, so as to keep it as one's favorite. In this case, the digital content recorded on the internal HDD should be placed into an unusable state so as not to increase copies of the digital content.

As one method for moving the digital content without increasing its copies, the entire digital content is first copied from the internal HDD to the DVD-RAM, and then the digital content originally recorded on the internal HDD is nullified, i.e., placed into an unusable state, by deleting the original digital content or the like.

In this case, however, a certain operation may enable the digital content to be moved any number of times, thereby failing to block unauthorized copying of the digital content. The following describes such an operation . Before the digital content is moved, the internal HDD is removed from the digital TV set and connected to a personal computer, to create backup data. Then, after the digital content is moved, the backup data is recorded onto the internal HDD.

Further, an accident such as a breakage of a power supply may occur during moving of the digital content, causing both the original digital content and a copy of the original digital content that is being moved, to be damaged and to become unusable. This results in real inconvenience for the user of the digital content. This may even result in an economic loss in some cases, like when an additional payment is required to obtain such digital content that has become unusable.

### SUMMARY OF THE INVENTION

In view of the above problems, the object of the present invention is to provide a digital content management device and a digital content management method for enabling digital content to be moved without being damaged, while blocking unauthorized copying of the digital content.

To achieve the above object, the digital content management device of the present invention is a digital content management device including: a first storing unit operable to store digital content and first management information for the digital content; a second storing unit operable to store second management information for the digital content; a management information judging unit operable to judge, before the digital content is used, whether the digital content is permitted to be used or not, by comparing the first management information with the second management information; and a management information updating unit operable to update the first management information and the second management information, when a judgment result by the management information is affirmative and the digital content is used.

According to this construction, for example when digital content is recorded on an HDD internally provided in a digital TV set, the device judges whether such an operation has been performed or not as that backup data of the entire internal HDD is created before the digital content is moved, and the backup data is recorded onto the internal HDD after the digital content is moved to a DVD-RAM or the like. If judging that such an operation has been performed, the device prohibits the digital content recorded on the internal HDD from being used. In this way, unauthorized use of digital content can be blocked.

Also, the digital content management device of the present invention may further include: a management information encrypting unit operable to encrypt the first management information, before the first storing unit stores the first management information; and a management information decrypting unit operable to decrypt the first management information, before the management information judging unit compares the first management information with the second management information. Therefore, management information for digital content is not likely to be tampered, thereby further blocking unauthorized copying of the digital content.

Alternatively, the digital content management device of the present invention may further include: a first encoding unit operable to encode the first management information, before the first storing unit stores the first management information; and a second encoding unit operable to encode the second management information, before the management information judging unit compares the first management information with the second management information. Therefore, management information for digital content is not likely to be tampered, thereby further blocking unauthorized copying of the digital content.

Also, the digital content management device of the present invention may further include: a first encoding unit operable to encode the first management information, before the management information judging unit compares the first management information with the second management information; and a second encoding unit operable to encode the second management information, before the second storing unit stores the second management information. In addition to the above effect, therefore, an amount of data to be stored in the second storing unit can be reduced. This construction is accordingly effective when a semiconductor memory or the like that has a smaller storage capacity than an HDD or the like is used as the second storing unit.

Also, the digital content management device of the present invention may further include: a location obtaining unit operable to obtain use-point location information showing a location of a use-point at which the digital content is used; an end-location storing unit operable to store end-point location information showing a location of an end-point at which the digital content is ended to be used; a location judging unit operable to judge whether the digital content is permitted to be used or not, by comparing the end-point location information stored in the end-location storing unit with the use-point location information obtained by the location obtaining unit; and a final judging unit operable to judge that the digital content is permitted to be used, only when judgment results by the management information judging unit and the location judging unit are both affirmative. This construction can ensure that parts of the digital content that have already been moved are recorded.

Accordingly, when digital content with CCI showing "Copy No More" is moved from one recording medium to another, parts of the digital content that have yet to be moved are not nullified even if the moving of the digital content is interrupted. Therefore, user convenience can be improved, without deviating from the DTCP's main purpose of prohibiting unauthorized copying.

Also, when the present invention is applied to an HDD recorder that records digital content onto its internal HDD, the first storing unit may be responsible for storing data into the internal HDD, and the second storing unit may be responsible for storing data into a nonvolatile memory. By storing information about the location of the use-point or the location of the end-point into the internal HDD, the number of times data is written to the nonvolatile memory can be reduced to the minimum. Also, this construction can ensure that information about the location of the use-point at which the digital content is used is constantly stored.

Also, even though the moving of the digital content is interrupted due to an accident such as a breakage of a power supply, the moving can be resumed from the interrupted location. Further, data tampering at the location of the use-point can be detected, and so user convenience can be improved while unauthorized copying is being blocked.

Also, in the digital content management device of the present invention, the end-location storing unit may store the end-point location information into the first storing unit. Therefore, when the second storing unit is such a recording device having a limit in the number of times data can be written thereto, the number of times data is written to the second storing unit can be reduced.

Also, in the digital content management device of the present invention, the end-location storing unit may encrypt the end-point location information and store the encrypted end-point location information. Therefore, when the first storing unit has a chance of unauthorized reading of its stored data, like when the first storing unit is an HDD, decoding of the read data at the location of the use-point is difficult. Accordingly, unauthorized use of the digital content can be blocked.

To store information about the location of the use-point at which the digital content is used, in the digital content management device of the present invention, the digital content may be made up of one or more data parts, and the use-point location information may be expressed by sequence information that is given to one of the one or more data parts, the one or more data parts each being given sequence information showing a sequence from a start of the digital content.

Also, the digital content management device of the present invention may further include a random-number generating unit operable to generate a random number and include the random number as one item of each of the first management information and the second management information. In this case, it is more difficult for an unauthorized user of the digital content to tamper management information for the digital content as compared with the case where management information for the digital content simply shows the number of times the digital content is used. Therefore, unauthorized use of digital content can be blocked further.

Also, the digital content management device of the present invention may further include an identification information obtaining unit operable to obtain identification information for identifying the digital content, wherein the first management information and the second management information each include the identification information. Therefore, whether such an operation is performed or not to rewrite digital content recorded on an internal HDD of a digital TV can be detected. Accordingly, unauthorized use of the rewritten digital content can be blocked.

Also, the digital content management device of the present invention may further include a hash-value comparing unit operable to compare a hash-value for the digital content read from the first storing unit with a hash-value included in the second management information read from the second storing unit, to judge whether the digital content is permitted to be used or not, wherein the identification information includes a hash-value for the digital content. Therefore, whether the digital content has been rewritten or not can be detected. This construction can further ensure that unauthorized use of the digital content is detected and blocked.

Also, in the digital content management device of the present invention, the first storing unit may encrypt the digital content using an encryption key before storing the digital content, and the identification information may include the encryption key, the digital content management device may further include an encryption key comparing unit operable to compare the encryption key included in the identification information read from the first storing unit with the encryption key included in the identification information read from the second storing unit, to judge whether the digital content is permitted to be used or not. Therefore, the data size of identification information for the digital content can be reduced, and so a storage capacity required to manage the digital content in the first storing unit and the second storing unit can be reduced. Due to this, the cost can be cut.

Also, in the digital content management device of the present invention, the second storing unit may be a nonvolatile memory. Therefore, the management information for digital content stored in the second storing unit is more difficult to be read or tampered as compared with the case where the management information is stored in a recording medium such as an internal HDD, thereby further blocking unauthorized use of the digital content.

Also, the digital content management program of the present invention may be a digital content management program, including: a first storing step of storing digital content and first management information for the digital content; a second storing step of storing second management information for the digital content; a management information updating step of updating the first management information stored in the first storing step and the second management information stored in the second storing step, when the digital content is used; and a management information judging step of judging whether the digital content is permitted to be used or not, by comparing the first management information stored in the first storing step with the second management information stored in the second storing step. Therefore, unauthorized use of digital content can be blocked in the same manner as that for the digital content management device.

Also, the digital content management program of the present invention may further include: a management information encrypting step of encrypting the first management information to be stored in the first storing step; and a management information decrypting step of decrypting the first management information stored in the first storing step. Alternatively, the digital content management program of the present invention may further include: a first encoding step of encoding the first management information to be stored in the first storing step; and a second encoding step of encoding the second management information stored in the second storing step. Therefore, it is difficult to tamper management information for digital content, and so unauthorized copying of the digital content can be blocked.

Also, the digital content management program of the present invention may further include: a first encoding step of encoding the first management information stored in the first storing step; and a second encoding step of encoding the second management information to be stored in the second storing step. Therefore, it is difficult to tamper management information for digital content, and so unauthorized copying of the digital content can be blocked.

Also, the digital content management program of the present invention may further include: a location obtaining step of obtaining use-point location information showing a location of a use-point at which the digital content is used; an end-location storing step of storing end-point location information showing a location of an end-point at which the digital content is ended to be used; a location judging step of judging whether the digital content is permitted to be used or not, by comparing the end-point location information stored in the end-location storing step with the use-point location information obtained by the location obtaining step; and a final judging step of judging that the digital content is permitted to be used, only when judgment results in the management information judging step and the location judging step are both affirmative. Therefore, a damage of digital content can be prevented from arising from an interruption of the moving process of the digital content due to an accident such as a breakage of a power supply, thereby improving user convenience.

In the digital content management program of the present invention, the end-point location information may be encrypted and stored in the end-location storing step. Therefore, unauthorized use of digital content by unauthorized reading of information about a location of an end-point and tampering data at the location of the end-point can be blocked.

In the digital content management program of the present invention, the digital content may be made up of one or more data parts, and the use-point location information may be expressed by sequence information that is given to one of the one or more data parts, the one or more data parts each being given sequence information showing a sequence from a start of the digital content. Therefore, as described above, user convenience can be improved, without deviating from the DTCP's main purpose of prohibiting unauthorized copying.

Also, the digital content management program of the present invention may further include a random-number generating step of generating a random number and including the random number as one item of each of the first management information and the second management information. Therefore, unauthorized use of digital content can be blocked.

Also, the digital content management program of the present invention may further include an identification information obtaining step of obtaining identification information for identifying the digital content, wherein the first management information and the second management information each include the identification information. Therefore, unauthorized use of digital content can be blocked.

To detect whether the digital content has been rewritten or not, the digital content management program of the present invention may further include a hash-value comparing step of comparing a hash-value for the digital content stored in the first storing step with a hash-value included in the second management information stored in the second storing step, to judge whether the digital content is permitted to be used or not, wherein the identification information includes a hash-value for the digital content. This can further ensure that the above unauthorized use can be detected and blocked.

Also, in the digital content management program of the present invention, in the first storing step the digital content may be encrypted using an encryption key before the digital content is stored, and the identification information may include the encryption key, the digital content management program further including an encryption key comparing step of comparing the encryption key included in the identification information stored in the first storing step with the encryption key included in the identification information stored in the second storing step, to judge whether the digital content is permitted to be used or not. Therefore, unauthorized use of digital content can be blocked.

### BRIEF DESCRIPTION OF THE DRAWINGS

These and other objects, advantages and features of the invention will become apparent from the following description thereof taken in conjunction with the accompanying drawings that illustrate a specific embodiment of the invention.

In the drawings:
FIG. 1 is a functional block diagram showing a schematic construction of a digital TV according to an embodiment of the present invention;
FIG. 2 is a functional block diagram showing a schematic construction of a datamanaging unit 105 included in the digital TV 1;
FIG. 3 is a flowchart showing a main routine of processing executed by the data managing unit 105;
FIG. 4 is a flowchart showing a processing flow of a recording process executed by the data managing unit 105;
FIG. 5 is a flowchart showing a processing flow of a reproducing process executed by the data managing unit 105;
FIG. 6 is a flowchart showing a processing flow of a moving process executed by the data managing unit 105; and
FIG. 7 is a functional block diagram showing a schematic construction of a set top box according to modification (8).

### DESCRIPTION OF THE PREFERRED EMBODIMENT

The following describes a preferred embodiment of a digital content management device of the present invention, taking a BS digital television set (hereafter simply, a "digital TV") as example, with reference to the drawings. A digital TV according to the present embodiment receives digital content transmitted by digital broadcasting, and accumulates the digital content in an internal HDD. The digital TV is a device for displaying video of the digital content on a monitor, transferring the digital content to another recording medium, and the like, while protecting the digital content.

### (Overall Construction)

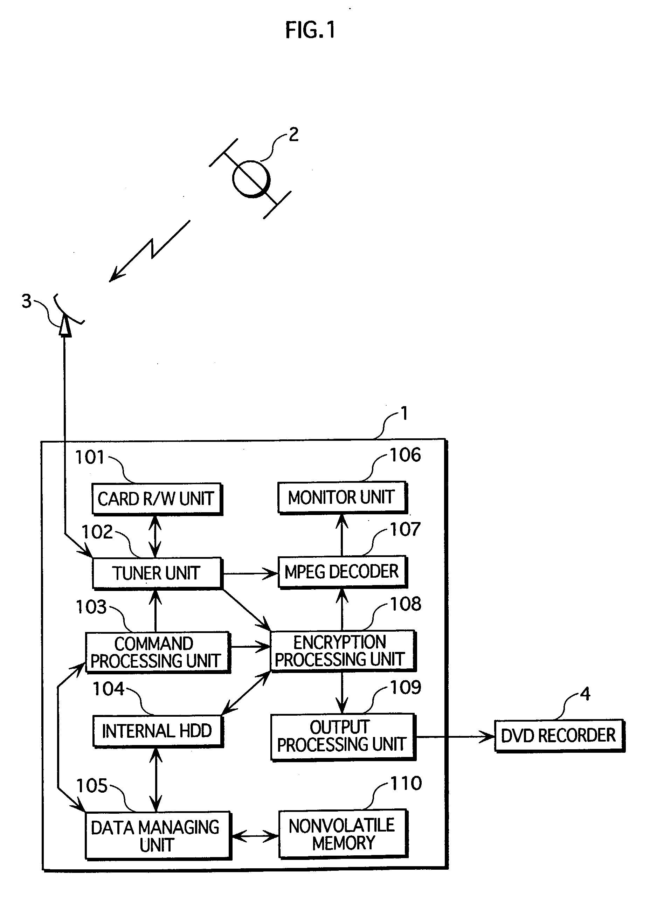

FIG. 1 is a functional block diagram showing the overall construction of the digital TV according to the present embodiment. As shown in FIG. 1, the digital TV 1 includes a tuner unit 102, a monitor unit 106, and other units. A BS digital antenna 3 for receiving radio waves of BS digital broadcasting is connected to the digital TV 1. Also, a DVD recorder 4 for recording received digital content onto a DVD is connected to the digital TV 1 via the IEEE1394 interface.

The digital TV 1 receives a BS digital broadcast transmitted from a broadcast satellite 2 via the BS digital antenna 3 that is in a dish-shape. In detail, the tuner unit 102 receives a broadcast signal transmitted by BS digital broadcasting, and demodulates the broadcast signal, to generate a transport stream. The tuner unit 102 deletes, out of transport stream packets (hereafter, "TS packets") included in the generated transport stream, TS packets other than those corresponding to a channel designated by a command processing unit 103.

Among the TS packets corresponding to the channel designated by the command processing unit 103, some TS packets may have been scrambled for the purpose of prohibiting a user who is not a contractor from viewing them. The tuner unit 102 refers to control information included in the transport stream, and requests a card reader/writer (R/W) unit 101 to send a decryption key that can be used to descramble the scrambled TS packets.

The card R/W unit 101 refers to a so-called CAS (Conditional Access System) card, to read the decryption key requested by the tuner unit 102, and returns the decryption key to the tuner unit 102. When not finding the requested decryption key in the CAS card, the card R/W unit 101 sends a message indicating that the decryption key is not included in the CAS card, to the tuner unit 102. When receiving the decryption key returned from the card R/W unit 101, the tuner unit 102 descrambles the scrambled TS packets using the decryption key, to construct an MPEG transport stream. Then, the tuner unit 102 outputs the MPEG transport stream to one or both of an encryption processing unit 108 and an MPEG decoder 107 according to an instruction sent from the command processing unit 103.

When receiving the message indicating that the decryption key is not included in the CAS card from the card R/W unit 101, the tuner unit 102 deletes the scrambled TS packets without executing processing for descrambling the TS packets. The tuner unit 102 directly uses TS packets that have not been scrambled, to construct an MPEG transport stream without inquiring the card R/W unit 101, and outputs the MPEG transport stream to one or both of the encryption processing unit 108 and the MPEG decoder 107 according to an instruction sent from the command processing unit 103.

Here, the command processing unit 103 may designate different channels as a channel of TS packets to be outputted to the encryption processing unit 108 and a channel of TS packets to be outputted to the MPEG decoder 107. In this case, the tuner unit 102 follows this instruction to output to the encryption processing unit 108, an MPEG transport stream relating to the channel designated for the encryption processing unit 108, and output to the MPEG decoder 107, an MPEG transport stream relating to the channel designated for the MPEG decoder 107. This enables a so-called counterprogram to be recorded onto the internal HDD 104.

The command processing unit 103 receives a command from a remote controller or a control panel (both not shown), and sends an instruction according to the command, to the tuner unit 102, the encryption processing unit 108, or the data managing unit 105. To be more specific, the command processing unit 103 designates a reception channel to the tuner unit 102. Along with the reception channel, the command processing unit 103 also designates, as an output designation of an MPEG transport stream relating to this channel, one or both of the encryption processing unit 108 and the MPEG decoder 107.

Also, the command processing unit 103 instructs the encryption processing unit 108 to read digital content from the internal HDD 104. Here, the command processing unit 103 sends identification information for the digital content and information about a location of a start-point at which the digital content is started to be read (hereafter referred to as an "offset value") to the encryption processing unit 108. Along with this instruction, the command processing unit 103 designates, to the encryption processing unit 108, one or both of the MPEG decoder 107 and the output processing unit 109 as an output destination of an MPEG transport stream relating to the digital content to be read. It should be noted here that in the present embodiment an "offset value" is a number sequentially given, from the first TS packet of the digital content, to each of TS packets constituting the digital content.

The command processing unit 103 executes three processes in relation to the data managing unit 105. The first process is to send a notification that the digital content is to be recorded onto the internal HDD 104. To be more specific, the command processing unit 103 sends to the data managing unit 105, a notification that an MPEG transport stream sent from the tuner unit 102 is to be recorded onto the internal HDD via the encryption processing unit 108. Here, the command processing unit 103 sends identification information for the digital content to the data managing unit 105. The identification information may be obtained by the command processing unit 103 via the remote controller or the control panel.

The second process is to send an instruction to read digital content recorded on the internal HDD 104. To be more specific, the command processing unit 103 sends identification information for the digital content and an offset value to the data managing unit 105, and inquires the data managing unit 105 as to whether the digital content is permitted to be read from the internal HDD 104 or not. When receiving an affirmative response to this inquiry from the data managing unit 105, the command processing unit 103 instructs the encryption processing unit 108 to read the digital content from the internal HDD 104, decrypt the read digital content, and output the decrypted digital content to the output processing unit 109. Here, the command processing unit 103 sends the identification information to the encryption processing unit 108.

When CCI attached to digital content relating the MPEG transport stream received from the tuner unit 102 shows "Copy One Generation", the encryption processing unit 108 changes the CCI to show "Copy No More". Then, the encryption processing unit 108 encrypts the digital content and records the encrypted digital content onto the internal HDD 104. The encryption processing unit 108 does not record digital content to which CCI showing "Copy No More" is attached, onto the internal HDD 104.

When receiving the instruction from the command processing unit 103 to read digital content from the internal HDD 104 along with the identification information for the digital content and the offset value, the encryption processing unit 108 reads the digital content from the internal HDD 104, and decrypts the read digital content, to generate an MPEG transport stream. Then, the encryption processing unit 108 outputs the generated MPEG transport stream to one or both of the MPEG decoder 107 and the output processing unit 109, according to an instruction sent from the command processing unit 103.

The internal HDD 104 is accessed by the encryption processing unit 108 or the data managing unit 105, to record or read digital content or the like. Also, the MPEG decoder 107 decrypts the MPEG transport stream received from the tuner unit 102, to generate video and audio signals, and outputs the generated video and audio signals to the monitor unit 106. The monitor unit 106 receives the video and audio signals from the MPEG decoder 107, and outputs video from itself, and outputs audio from an attached speaker.

When recording digital content onto the internal HDD 104, the data managing unit 105 also records management information for the digital content onto a nonvolatile memory 110. When the data managing unit 105 reads the digital data from the internal HDD 104, the data managing unit 105 verifies the authenticity of the digital content recorded on the internal HDD 104 by referring to the management information recorded on the nonvolatile memory 110. The data managing unit 105 receives identification information for digital content from the command processing unit 103, and records management information (described later) for managing the digital content identified by the identification information, onto each of the internal HDD 104 and the nonvolatile memory 110.

Apart from this, upon receipt of an inquiry from the command processing unit 103 as to whether predetermined digital content is permitted to be read from the internal HDD 104 or not, the data managing unit 105 reads management information for the digital content from each of the internal HDD 104 and the nonvolatile memory 110, and compares the management information read from the internal HDD 104 with the management information read from the nonvolatile memory 110 to determine if they match. Then, the data managing unit 105 judges whether the digital content is permitted to be read or not based on the matching result, and sends the judgment result to the command processing unit 103.

Upon receipt of the MPEG transport stream from the encryption processing unit 108, the output processing unit 109 transmits the MPEG transport stream to the DVD recorder 4 according to the procedure defined by the DTCP specification, the IEEE1394 standard, or the like.

### (Construction of the Data Managing Unit 105)

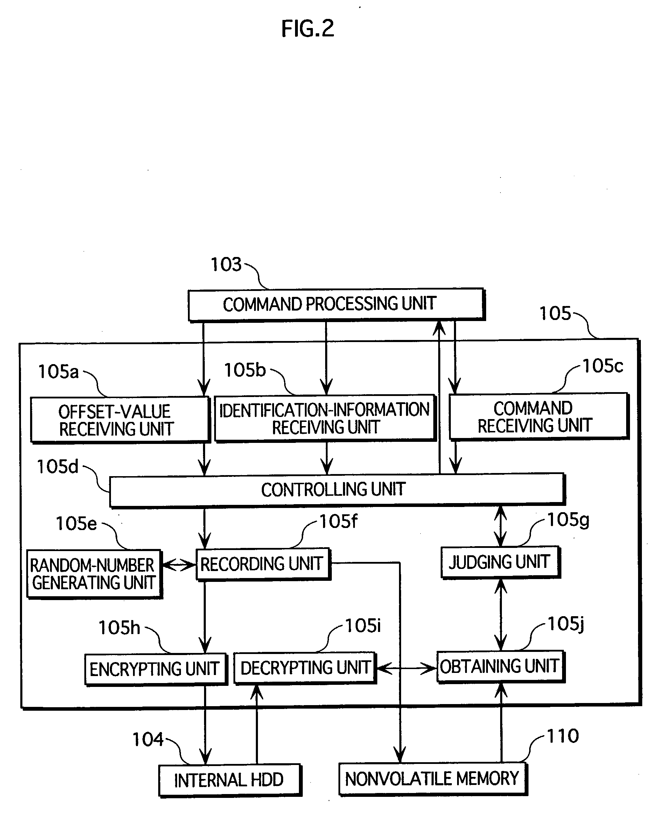

The following describes the data managing unit 105 in further detail. FIG. 2 is a functional block diagram showing the construction of the data managing unit 105. As shown in FIG. 2, the data managing unit 105 is composed of an offset-value receiving unit 105a, an identification-information receiving unit 105b, a command receiving unit 105c, and other functional blocks. The offset-value receiving unit 105a is a functional block for receiving from the command processing unit 103 an offset value that is used to read digital content recorded on the internal HDD 104.

The identification-information receiving unit 105b receives identification information for identifying the digital content from the command processing unit 103. The command receiving unit 105c receives a command showing a type of required processing, i.e., a command showing one of a recording process, a reproducing process, and a moving process, from the command processing unit 103. A controlling unit 105d assigns processing to a recording unit 105f, a judging unit 105g, and the like, according to a command received by the command receiving unit 105c. Also, the controlling unit 105d sends a judgment result sent from the judging unit 105g to the command processing unit 103, and requests the recording unit 105f to execute processing according to the judgment result.

Upon receipt of identification information for digital content and an offset value from the controlling unit 105d, the recording unit 105f sends a request for a random number to a random-number generating unit 105e, and obtains the random number from the random-number generating unit 105e. Then, the recording unit 105f records the identification information, the offset value, and the random number onto the nonvolatile memory 110. Also, the recording unit 105f passes the identification information, the offset value, and the random number, to an encrypting unit 105h, and requests the encrypting unit 105h to record the identification information, the offset value, and the random number onto the internal HDD 104. Upon receipt of the request from the recording unit 105f, the encrypting unit 105h encrypts the identification information, the offset value, and the random number, and records the encrypted identification information, the encrypted offset value, and the encrypted random number onto the internal HDD 104.

Upon receipt of the identification information and the offset value from the controlling unit 105d, the judging unit 105g passes the identification information to an obtaining unit 105j, and requests the obtaining unit 105j to read a random number corresponding to the identification information from each of the internal HDD 104 and the nonvolatile memory 110. Upon receipt of the random number read from the internal HDD 104 and the random number read from the nonvolatile memory 110 from the obtaining unit 105j, the judging unit 105g compares these random numbers to determine if they match. Also, the judging unit 105g compares the offset value received from the controlling unit 105d and the offset value read from the internal HDD 104, to determine if the offset value received from the controlling unit 105d is equal to or smaller than the offset value received from the controlling unit 105d or not.

When judging that the random numbers match, and that the offset value read from the internal HDD 104 is equal to or smaller than the offset value received from the controlling unit 105d, the judging unit 105g sends the judgment result being that the digital content is permitted to be read, to the controlling unit 105d. In the other cases, the judging unit 105g sends the judgment result being that the digital content is not permitted to be read, to the controlling unit 105d.

Upon receipt of the identification information and the offset value from the judging unit 105g, the obtaining unit 105j requests the decrypting unit 105i to read an offset value and a random number corresponding to the identification information and the like, from the internal HDD 104. Then, upon receipt of the offset value and the random number from the decrypting unit 105i, the obtaining unit 105j passes the offset value and the random number to the judging unit 105g. Also, along with this processing, the obtaining unit 105j reads a random number corresponding to the identification information and the like from the nonvolatile memory 110, and passes the read random number, too, to the judging unit 105g.

The random-number generating unit 105e generates a random number according to a well-known algorithm as requested by the recording unit 105f, and passes the generated random number to the recording unit 105f. Also, the encrypting unit 105h and the decrypting unit 105i respectively execute encryption processing and decryption processing according to a well-known algorithm.

### (Processing of the Data Managing Unit 105)

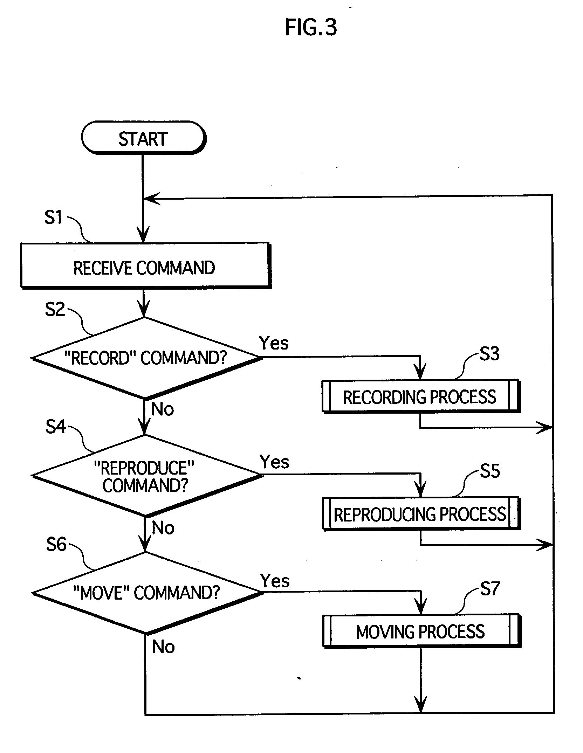

The following describes the processing of the data managing unit 105, with reference to the drawings. As described above, the data managing unit 105 executes one of three processes according to a request sent from the command processing unit 103. The three processes are a recording process, a reproducing process, and a moving process. FIG. 3 is a flowchart showing a main routine of the processing executed by the data managing unit 105. As shown in FIG. 3, the data managing unit 105 receives, using the command receiving unit 105c, a command sent from the command processing unit 103 (step S1). The command receiving unit 105c passes the received command to the controlling unit 105d.

Upon receipt of the command from the command receiving unit 105c, the controlling unit 105d determines a process to be executed next by referring to the command. To be more specific, when the received command is a "record" command (step S2: Yes), the controlling unit 105d determines that a recording process is to be executed next (step S3). When the received command is not a "record" command (step S2: No), but a "reproduce" command (step S4: Yes), the controlling unit 105d determines that a reproducing process is to be executed next (step S5).

When the received command is not a "reproduce" command (step S4: No), but a "move" command (step S6: Yes), the controlling unit 105d determines that a moving process is to be executed next (step S7). After completing the processing in steps S3, S5, and S7, or when the received command is not a "record" command, a "reproduce" command, nor a "move" command (step S6: No), the controlling unit 105d returns to step S1, and repeats the processing.

The following describes in further detail, the recording process, the reproducing process, and the moving process that are executed by the data managing unit 105.

### (1) Recording Process

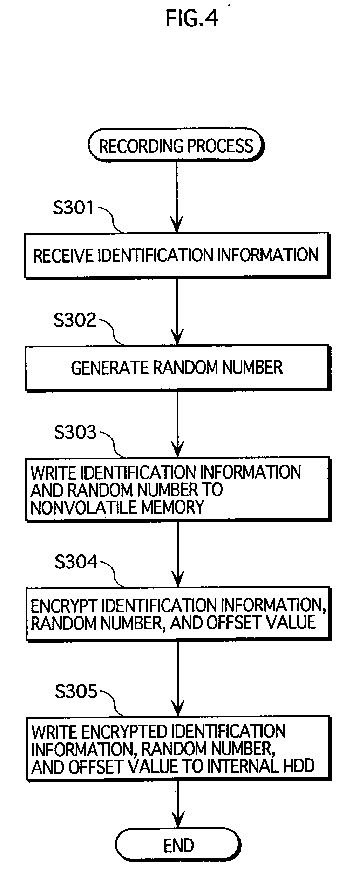

FIG. 4 is a flowchart showing a processing flow of the recording process that is executed by the data managing unit 105. As shown in FIG. 4, the data managing unit 105 receives, using the identification-information receiving unit 105b, identification information sent from the command processing unit 103 (step S301). The identification information is provided for associating digital content to be recorded onto the internal HDD 104 with a random number that is described later. The controlling unit 105d receives the identification information from the identification-information receiving unit 105b, and passes the identification information to the recording unit 105f, and at the same time, passes an offset value being set at zero, to the recording unit 105f.

Upon receipt of the identification information and the offset value from the controlling unit 105d, the recording unit 105f requests the random-number generating unit 105e to generate a random number. The random-number generating unit 105e generates a random number as requested by the recording unit 105f (step S302). Then, the random-number generating unit 105e passes the generated random number to the recording unit 105f.

Upon receipt of the random number from the random-number generating unit 105e, the recording unit 105f writes the random number, and the identification information received from the controlling unit 105d, to the nonvolatile memory 110 (step S303). Also, the recording unit 105f passes the identification information, the random number, and the offset value to the encrypting unit 105h, and requests the encrypting unit 105h to record them onto the internal HDD 104. The encrypting unit 105h encrypts the identification information, the random number, and the offset value received from the recording unit 105f (step S304). Then, the encrypting unit 105h writes the encrypted identification information, the encrypted random number, and the encrypted offset value to the internal HDD 104 (step S305).

### (2) Reproducing Process

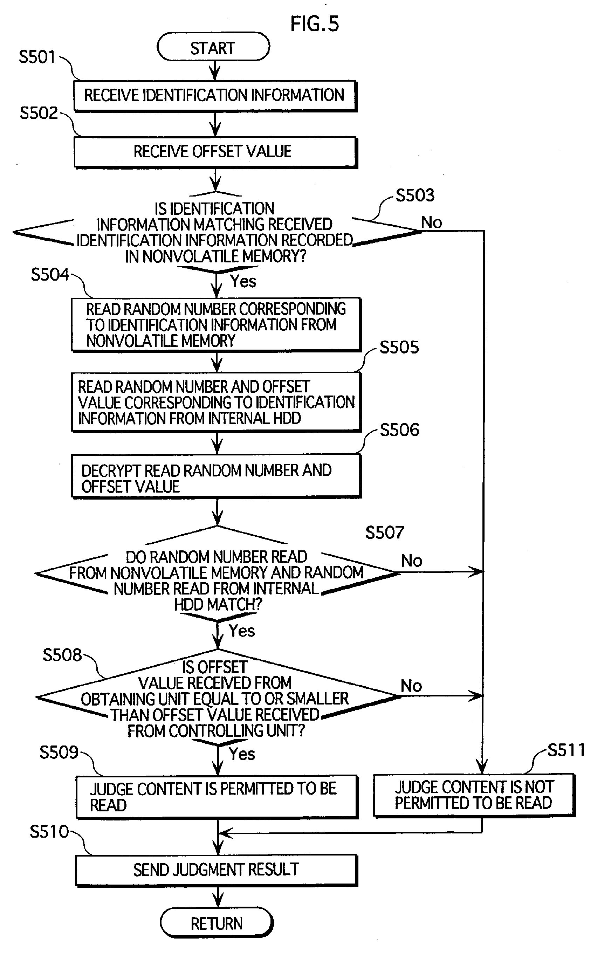

FIG. 5 is a flowchart showing a processing flow of the reproducing process that is executed by the data managing unit 105. As shown in FIG. 5, the data managing unit 105 receives, using the identification-information receiving unit 105b, identification information from the command processing unit 103 (step S501). Further, the data managing unit 105 receives, using the offset-value receiving unit 105a, an offset value from the command processing unit 103 (step S502).

Upon receipt of the identification information from the identification-information receiving unit 105b and the offset value from the offset-value receiving unit 105a, the controlling unit 105d passes the identification information and the offset value to the judging unit 105g. Then, the controlling unit 105d requests the judging unit 105g to judge whether digital content identified by the identification information is permitted to be read from the internal HDD 104 or not.

Upon receipt of the request from the controlling unit 105d, the judging unit 105g passes the identification information received from the controlling unit 105d to the obtaining unit 105j. Then, the judging unit 105g requests the obtaining unit 105j to read a random number corresponding to the identification information from the nonvolatile memory 110 and to read a random number and an offset value corresponding to the identification information from the internal HDD 104.

Upon receipt of the request from the judging unit 105g, the obtaining unit 105j searches the nonvolatile memory 110, for identification information that matches the identification information received from the judging unit 105g. When the search result shows that such identification information is recorded on the nonvolatile memory 110 (step S503), the judging unit 105g reads a random number corresponding to the identification information from the nonvolatile memory 110 (step S504).

Further, the obtaining unit 105j passes the identification information received from the judging unit 105g to the decrypting unit 105i, and requests the decrypting unit 105i to read a random number and an offset value corresponding to the identification information from the internal HDD 104, and to decrypt the random number and the offset value. Upon receipt of the request from the obtaining unit 105j, the decrypting unit 105i searches the internal HDD 104, and reads the random number and the offset value corresponding to the identification information received from the obtaining unit 105j (step S505).

Then, the decrypting unit 105i decrypts the read random number and the read offset value, and passes the decrypted random number and the decrypted offset value to the obtaining unit 105j (step S506). The obtaining unit 105j receives the random number and the offset value from the decrypting unit 105i, and passes the received data along with the random number read from the nonvolatile memory 110, to the judging unit 105g.

When receiving from the obtaining unit 105j the random number read from the nonvolatile memory 110 and the random number and the offset value read from the internal HDD 104, the judging unit 105g first compares the random number read from the nonvolatile memory 110 with the random number read from the internal HDD 104. When the comparison result shows that the random number read from the nonvolatile memory 110 and the random number read from the internal HDD 104 match (step S507: Yes), the judging unit 105g compares the offset value received from the controlling unit 105d with the offset value received from the obtaining unit 105g.

When the comparison result shows that the offset value received from the controlling unit 105d is equal to or smaller than the offset value received from the obtaining unit 105g (step S508: Yes), the judging unit 105g judges that digital content identified by the identification information is permitted to be read from the internal HDD 104 (step S509). When the judgment result in any of steps S503, S507, and S508 is "No", the judging unit 105g judges that the digital content identified by the identification information is not permitted to be read from the internal HDD 104 (step S511).

Then, the judging unit 105g passes the judgment result to the controlling unit 105d. Upon receipt of the judgment result from the judging unit 105g, the controlling unit 105d sends the above judgment result to the command processing unit 103, and ends the reproducing process (step S510).

### (3) Moving Process

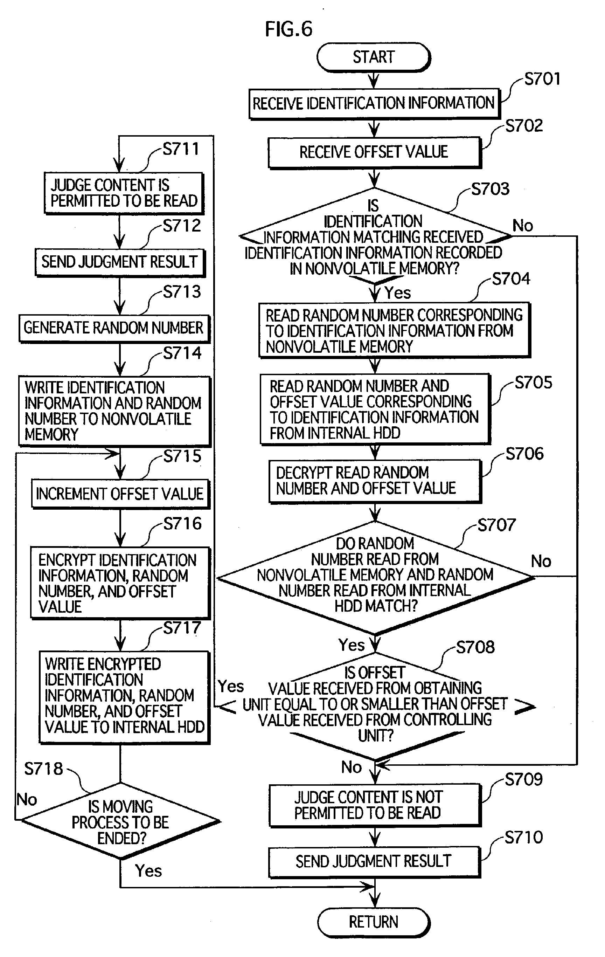

FIG. 6 is a flowchart showing a processing flow of the moving process that is executed by the data managing unit 105. As shown in FIG. 6, the data managing unit 105 receives, using the identification-information receiving unit 105b, identification information sent from the command processing unit 103 (step S701). Further, the data managing unit 105 receives, using the offset-value receiving unit 105a, an offset value sent from the command processing unit 103 (step S702).

Upon receipt of the identification information from the identification-information receiving unit 105b and the offset value from the offset-value receiving unit 105a, the controlling unit 105d passes the received identification information and the received offset value to the judging unit 105g. Then, the controlling unit 105d requests the judging unit 105g to judge whether digital content identified by the identification information is permitted to be read from the HDD 104 or not.

Upon receipt of the request from the controlling unit 105d, the judging unit 105g passes the identification information received from the controlling unit 105d to the obtaining unit 105j. Then, the judging unit 105g requests the obtaining unit 105j to read a random number corresponding to the identification information from the nonvolatile memory 110, and to read a random number and an offset value corresponding to the identification information from the internal HDD 104.

Upon receipt of the request from the judging unit 105g, the obtaining unit 105j searches the nonvolatile memory 110, for identification information that matches the identification information received from the judging unit 105g. When the search result shows that such identification information is recorded on the nonvolatile memory 110 (step S703: Yes), the judging unit 105g reads a random number corresponding to the identification information from the nonvolatile memory 110 (step S704).

Further, the obtaining unit 105j passes the identification information received from the judging unit 105g to the decrypting unit 105i, and requests the decrypting unit 105i to read a random number and an offset value corresponding to the identification information from the internal HDD 104 and to decrypt the random number and the offset value (step S705). Upon receipt of the request from the obtaining unit 105j, the decrypting unit 105i searches the internal HDD 104, for a random number and an offset value corresponding to the identification information received from the obtaining unit 105j, and reads from the internal HDD 104 the random number and the offset value corresponding to the identification information received from the obtaining unit 105j (step S706).

Then, the decrypting unit 105i decrypts the read random number and the read offset value, and passes the decrypted random number and the decrypted offset value to the obtaining unit 105j. Upon receipt of the random number and the offset value from the decrypting unit 105i, the obtaining unit 105j passes the received data along with the random number read from the nonvolatile memory 110, to the judging unit 105g.

When receiving from the obtaining unit 105j the random number read from the nonvolatile memory 110 and the random number and the offset value read from the internal HDD 104, the judging unit 105g first compares the random number read from the nonvolatile memory 110 with the random number read from the internal HDD 104. When the comparison result shows that the random number read from the nonvolatile memory 110 and the random number read from the internal HDD 104 match (step S707: Yes), the judging unit 105g compares the offset value received from the controlling unit 105d with the offset value received from the obtaining unit 105g.

When the comparison result shows that the offset value received from the controlling unit 105d is equal to or smaller than the offset value received from the obtaining unit 105g (step S708: Yes), the judging unit 105g judges that digital content identified by the identification information is permitted to be read from the internal HDD 104 (step S711), and sends this judgment result to the controlling unit 105d (step S712).

When the judgment result in any of steps S703, S707, and S708 is "No", the judging unit 105g judges that the digital content identified by the identification information is not permitted to be read from the internal HDD 104 (step S709), and sends this judgment result to the controlling unit 105d (step S710).

When the judgment result received from the judging unit 105g shows that the digital content is permitted to be read, the controlling unit 105d passes the offset value and the identification information for the digital content to the recording unit 105f, and requests the recording unit 105f to record them onto each of the internal HDD 104 and the nonvolatile memory 110. Upon receipt of the identification information and the offset value from the controlling unit 105d, the recording unit 105f requests the random-number generating unit 105e to generate a random number.

The random-number generating unit 105e generates a random number as requested by the recording unit 105f (step S713), and passes the generated random number to the recording unit 105f. Upon receipt of the random number from the random-number generating unit 105e, the recording unit 105f writes the received random number, and the identification information received from the controlling unit 105d, to the nonvolatile memory 110 (step S714). Also, the recording unit 105f increments the offset value received from the offset-value receiving unit 105a by one (step S715).

The recording unit 105f passes the identification information, the random number, and the offset value to the encrypting unit 105h, and requests the encrypting unit 105h to record them onto the internal HDD 104. The encrypting unit 105h encrypts the identification information, the random number, and the offset value received from the recording unit 105f (step S716). Then, the encrypting unit 105h writes the encrypted identification information, the encrypted random number, and the encrypted offset value to the internal HDD 104 (step S717).

Then, upon receipt of the judgment result from the judging unit 105g, the controlling unit 105d sends the judgment result to the command processing unit 103. Then, the controlling unit 105d judges whether an instruction to end the moving process has been received from the command processing unit 103 or not. When judging that such an instruction has not been received (step S718: No), the controlling unit 105d moves to step S715, and repeats the processing. Accordingly, information about a location of a use-point at which the digital content is used is successively and continuously recorded onto the internal HDD 104 in parallel with use of the digital content. Upon receipt of an instruction to end the moving process (step S718: Yes), the controlling unit 105d ends the moving process.

As described above, according to the digital TV according to the present embodiment, when such digital content whose CCI shows "Copy No More" is moved from the internal HDD 104 to another recording medium (e.g, a DVD in the present embodiment), parts of the digital content that have already been moved are successively recorded onto the DVD recorder 4. According to this construction, user convenience in moving digital content can be improved while preventing a copy of digital content from being generated due to the same digital content being present in each of the internal HDD 104 and the recording medium.

As described above, before the digital content is read from the internal HDD 104, the judgment is performed as to whether the digital content is permitted to be read or not, by referring to a random number recorded on the nonvolatile memory 110 that is separate from the internal HDD 104. Therefore, if such an operation is performed as that the internal HDD 104 is removed and connected to a personal computer to create backup data of the digital content before the digital content is moved, and then the backup data is recorded onto the internal HDD 104 after the digital content is moved, a random number for the digital content recorded on the internal HDD 104 and a random number for the digital content recorded on the nonvolatile memory 110 do not match. In this case, the digital content is not permitted to be read from the internal HDD 104. Accordingly, the digital TV 1 of the present invention can block unauthorized copying of digital content.

### (Modifications)

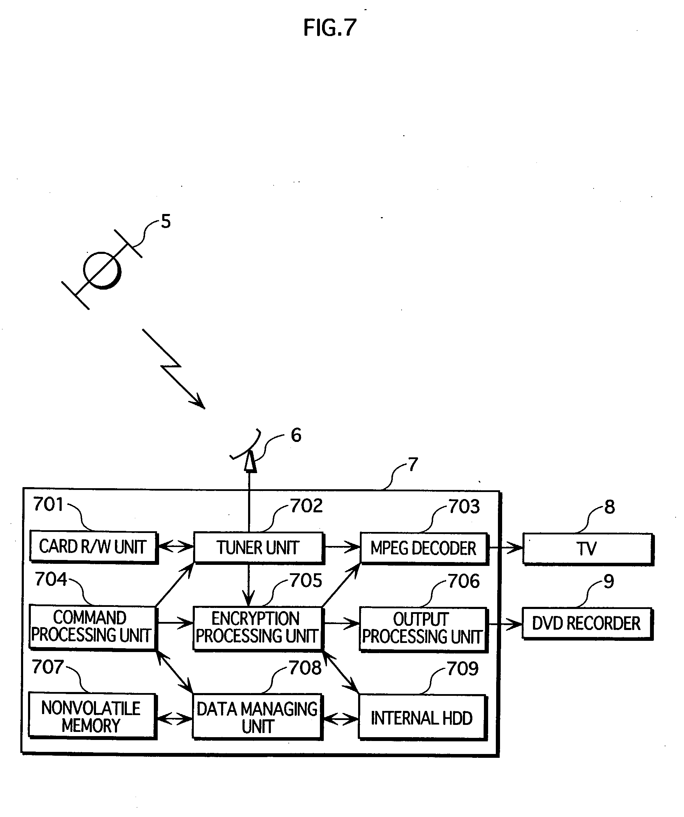

Although the present invention has been described based on the preferred embodiment as above, it should be clear that the present invention is not limited to the above embodiment. For example, the following modifications are possible.
(1) Although the above embodiment describes the case where an offset value is a number given to a TS packet that constitutes digital content, the present invention should not be limited to such. For example, instead of numbering each TS packet, a group of every predetermined number of TS packets (e.g., 10 TS packets) may be numbered, and a number given to such a group of TS packets may be used as an offset value.
   Also, time information included in the digital content may be referred to, and an offset value may be incremented by one at every predetermined period of time (e.g., 10sec.) from the start of the digital content. Further, an offset value may be incremented by one at every predetermined amount of data (e.g., eight KB) from the start of the digital content. It should be noted here that DTCP specifies that copies of the same digital content should not exist for more than one minute when the digital content is moved. Therefore, it is preferable to set the offset value in such a manner that the digital content can be divided into parts small enough to conform to the specification.
(2) Although the above embodiment describes the case where identification information for digital content is received by the command processing unit 103 via the remote controller or the control panel, the present invention should not be limited to such. For example, a name of a file used to record the digital content onto the internal HDD 104, or a hash value of the entire digital content may be used as the identification information for the digital content.
   Alternatively, instead of using a hash value as the identification information, an encryption key relating to an encryption process executed when the digital content is recorded onto the internal HDD 104 may be used as the identification information. In this case, the encryption key may be recorded onto each of the internal HDD 104 and the nonvolatile memory 110. When digital content is used, the judgment may be performed as to whether the digital content is permitted to be used or not by comparing the encryption key recorded on the internal HDD 104 with the encryption key recorded on the nonvolatile memory 110.
(3) The above embodiment describes the case where an offset value is recorded onto each of the internal HDD 104 and the nonvolatile memory 110 when digital content is moved. In addition to this, an offset value may also be recorded onto each of the internal HDD 104 and the nonvolatile memory 110 in the following cases. Assume that among data parts of digital content recorded on the DVD recorder 4 data parts that have been there for a predetermined period of time are deleted. In this case, an offset value showing the start of the remaining data parts that have not been deleted may be recorded onto each of the internal HDD 104 and the nonvolatile memory 110. Also, assume that digital content that is permitted to be reproduced only once is reproduced. In this case, too, an offset value showing the start of the remaining data parts of the digital content that are yet to be reproduced may be recorded onto each of the internal HDD 104 and the nonvolatile memory 110.
(4) Although the above embodiment describes the case where the digital content received by the digital TV is recorded onto the internal HDD 104, the present invention should not be limited to such. For example, the digital content may be recorded onto recording media other than an HDD, such as a memory card, a D-VHS, and a DVD recorder. In this case, the identification information, the offset value, and the random number are recorded onto the memory card or the like onto which the digital content is recorded, instead of being recorded onto the internal HDD 104.
(5) Although the above embodiment describes the case where the identification information for the digital content and the random number are recorded onto the nonvolatile memory 110, the present invention should not be limited to such. For example, the identification information and the random number may be recorded onto a recording device that requires authentication for access. Alternatively, the identification information and the random number may be recorded onto an EEPROM or a RAM to which power is constantly supplied. In short, the identification information and the like may be recorded onto any recording device that does not permit general users to freely read and write data.
(6) Although the above embodiment describes the case where the digital content is moved from the internal HDD 104 to the DVD recorder 4, the present invention should not be limited to such. For example, the digital content may instead be moved from the internal HDD 104 to a recording medium other than a DVD recorder onto which data can be digitally recorded, such as a memory card, a D-VHS, and an HDD recorder.
(7) The above embodiment describes the casewhere a random number is encrypted by the encrypting unit 105h when the random number is recorded onto the internal HDD 104, the random number is decrypted by the decrypting unit 105i when the random number is read from the internal HDD 104, and then the decrypted random number is compared with the random number recorded on the nonvolatile memory 110. However, the present invention should not be limited to such. The following method may instead be used.
   When the random number is recorded onto the internal HDD 104, a value resulting from converting the random number using a one-way function may be recorded onto the internal HDD 104. In this case, decryption is not performed when the random number is read from the internal HDD 104. Also, the random number may be directly recorded onto the nonvolatile memory 110 as it is, and the random number may be converted using the one-way function when the random number is read. Then, the value resulting from converting the random number read from the internal HDD 104 and the value resulting from converting the random number read from the nonvolatile memory 110 may be compared, to judge whether digital content relating to the random numbers is permitted to be read or not.
   On the contrary, the value resulting from converting the random number using a one-way function may be recorded onto the nonvolatile memory 110, and the random number may be directly recorded onto the internal HDD 104 as it is, and the random number in the internal HDD 104 may be converted using the same one-way function when the random number is read. By doing so, too, the same effect as above can be obtained. This method is particularly effective in such a case where a hash-value for digital content is used as identification information for the digital content as described later, because this method can reduce a data amount of identification information to be recorded onto the nonvolatile memory 110 whose storage capacity is relatively limited as compared with the internal HDD 104.
(8) Although the above embodiment describes the case where the present invention is applied to the digital TV 1, the present invention should not be limited to such. For example, the present invention can be applied to a set top box that is connected to a television set for receiving digital broadcasts. FIG. 7 is a functional block diagram showing a schematic construction of a set top box to which the present invention is applied.
   As shown in FIG. 7, the set top box 7 has substantially the same construction as the digital TV 1 according to the above embodiment of the present invention, with a major difference being in that the set top box 7 is connected to an analogue high-definition TV via a component cable, whereas the digital TV 1 is internally provided with the monitor unit 106.
   As the digital TV 1, the set top box 7 receives, using a BS antenna 6, a BS digital broadcast from a broadcast satellite 5, demodulates digital content using a tuner unit 6, and encrypts, using an encryption processing unit 705, the demodulated digital content according to a user designation received by a command processing unit 704 and records the encrypted digital content onto an internal HDD 709. Here, as in the above embedment, identification information and the like are recorded onto each of the internal HDD 709 and a nonvolatile memory 707 in the set top box 7.
   The set top box 7 reads digital content from the internal HDD 709 according to a user designation received using the command processing unit 704, and encrypts the read digital content using the encryption processing unit 705. Then, the set top box 7 outputs the decrypted digital content to the analogue high-definition television set 8, via the MPEG decoder 703. In this case, too, the set top box 7 compares identification information and the like for the digital content recorded on the internal HDD 709 and identification information and the like recorded on the nonvolatile memory 707 as in the above embodiment, to judge whether the digital content is permitted to be read or not.
   As described above, the present invention applied to a set top box can also produce the same effect as in the above embodiment. To be more specific, the present invention applied to the set top box can block unauthorized copying of digital content due to such an operation as that backup data of the digital content recorded on the set top box is created, the digital content is moved from the set top box to another recording medium, and then the backup data is copied to an HDD internally provided in the set top box.
(9) Although the above embodiment describes the case where information about a location of a start-point at which digital content is started to be read is recorded onto the internal HDD 104 as an offset value, the present invention should not be limited to such.
   In the above embodiment, (a) an offset value is first incremented (step S715), (b) identification information, a random number, and an offset value are encrypted (step S716), and then, (c) the encrypted identification information, the encrypted random number, and the encrypted offset value are recorded onto the internal HDD 104 (step S717). Instead of this procedure, the following procedure may be employed. That is, (a') identification information, a random number, and an offset value are first encrypted, (b') the encrypted identification information, the encrypted random number, and the encrypted offset value are recorded onto the internal HDD 104, and then (c') an offset value is incremented.
   By doing so, information about a location of an end-point at which digital content is ended to be used is constantly recorded onto the internal HDD 104. Therefore, even if a moving process in which digital content is moved from the internal HDD 104 to another recording medium is interrupted due to an accident such as a breakage of a power supply, the digital content can be started to be used from an unprocessed part when the moving process is resumed. This is highly convenient for the user.
   Also, even in the case of this method, an offset value that is required to be rewritten frequently is written only to the internal HDD 104, and is not written to the nonvolatile memory 110. Therefore, this method is particularly effective when the nonvolatile memory 110 has a limit in the number of times data can be written thereto, like when the nonvolatile memory 110 is a flash memory.
   In this case, if an offset value is encrypted and then recorded, a location of an end-point at which the digital content is ended to be used cannot be made known easily. This can block such unauthorized use of digital content as that the internal HDD 104 is removed and connected to a personal computer, and data at the location of the end-point is tampered to perform unauthorized copying of the digital content. Accordingly, even though information about the location of the end point is not recorded onto the nonvolatile memory 110, unauthorized copying made by tampering data at the location of the end-point can be blocked.
   It should be noted here that an offset value is not necessarily given to every TS packet as described in the modification (1). For example, in such a case where an offset value is given to every ten TS packets, the first TS packet, the 11^{th} TS packet, the 21^{st} TS packet, and the like can be a location of a start-point at which digital content is started to be used. In this case, values "0", "10", "20", and the like are sequentially recorded as information about a location of an end-point at which the digital content is ended to be used.
(10) The present invention may be a program that makes a computer execute the above-described processes. In this case, the computer can manage digital content as described above, so as to produce the same effect as described above.

Although the present invention has been fully described by way of examples with reference to the accompanying drawings, it is to be noted that various changes and modifications will be apparent to those skilled in the art. Therefore, unless such changes and modifications depart from the scope of the present invention, they should be construed as being included therein.

## Claims

1. A digital content management device, comprising:
a first storing unit operable to store digital content and first management information for the digital content;
a second storing unit operable to store second management information for the digital content;
a management information judging unit operable to judge, before the digital content is used, whether the digital content is permitted to be used or not, by comparing the first management information with the second management information; and
a management information updating unit operable to update the first management information and the second management information, when a judgment result by the management information is affirmative and the digital content is used.

2. The digital content management device of Claim 1, further comprising:
a management information encrypting unit operable to encrypt the first management information, before the first storing unit stores the first management information; and
a management information decrypting unit operable to decrypt the first management information, before the management information judging unit compares the first management information with the second management information.

3. The digital content management device of Claim 1, further comprising:
a first encoding unit operable to encode the first management information, before the first storing unit stores the first management information; and
a second encoding unit operable to encode the second management information, before the management information judging unit compares the first management information with the second management information.

4. The digital content management device of Claim 1, further comprising:
a first encoding unit operable to encode the first management information, before the management information judging unit compares the first management information with the second management information; and
a second encoding unit operable to encode the second management information, before the second storing unit stores the second management information.

5. The digital content management device of Claim 1, further comprising:
a location obtaining unit operable to obtain use-point location information showing a location of a use-point at which the digital content is used;
an end-location storing unit operable to store end-point location information showing a location of an end-point at which the digital content is ended to be used;
a location judging unit operable to judge whether the digital content is permitted to be used or not, by comparing the end-point location information stored in the end-location storing unit with the use-point location information obtained by the location obtaining unit; and
a final judging unit operable to judge that the digital content is permitted to be used, only when judgment results by the management information judging unit and the location judging unit are both affirmative.

6. The digital content management device of Claim 5,
wherein the end-location storing unit stores the end-point location information into the first storing unit.

7. The digital content management device of Claim 5,
wherein the end-location storing unit encrypts the end-point location information and stores the encrypted end-point location information.

8. The digital content management device of Claim 5,
wherein the digital content is made up of one or more data parts, and
the use-point location information is expressed by sequence information that is given to one of the one or more data parts, the one or more data parts each being given sequence information showing a sequence from a start of the digital content.

9. The digital content management device of Claim 1, further comprising,
a random-number generating unit operable to generate a random number and include the random number as one item of each of the first management information and the second management information.

10. The digital content management device of Claim 1, further comprising,
an identification information obtaining unit operable to obtain identification information for identifying the digital content,
wherein the first management information and the second management information each include the identification information.

11. The digital content management device of Claim 10, further comprising,
a hash-value comparing unit operable to compare a hash-value for the digital content read from the first storing unit with a hash-value included in the second management information read from the second storing unit, to judge whether the digital content is permitted to be used or not,
wherein the identification information includes a hash-value for the digital content.

12. The digital content management device of Claim 10,
wherein the first storing unit encrypts the digital content using an encryption key before storing the digital content, and
the identification information includes the encryption key,
the digital content management device further comprising,
an encryption key comparing unit operable to compare the encryption key included in the identification information read from the first storing unit with the encryption key included in the identification information read from the second storing unit, to judge whether the digital content is permitted to be used or not.

13. The digital content management device of Claim 1,
wherein the second storing unit is a nonvolatile memory.

14. A digital content management program, comprising:
a first storing step of storing digital content and first management information for the digital content;
a second storing step of storing second management information for the digital content;
a management information updating step of updating the first management information stored in the first storing step and the second management information stored in the second storing step, when the digital content is used; and
a management information judging step of judging whether the digital content is permitted to be used or not, by comparing the first management information stored in the first storing step with the second management information stored in the second storing step.

15. The digital content management program of Claim 14, further comprising:
a management information encrypting step of encrypting the first management information to be stored in the first storing step; and
a management information decrypting step of decrypting the first management information stored in the first storing step.

16. The digital content management program of Claim 14, further comprising:
a first encoding step of encoding the first management information to be stored in the first storing step; and
a second encoding step of encoding the second management information stored in the second storing step.

17. The digital content management program of Claim 14, further comprising:
a first encoding step of encoding the first management information stored in the first storing step; and
a second encoding step of encoding the second management information to be stored in the second storing step.

18. The digital content management program of Claim 14, further comprising:
a location obtaining step of obtaining use-point location information showing a location of a use-point at which the digital content is used;
an end-location storing step of storing end-point location information showing a location of an end-point at which the digital content is ended to be used;
a location judging step of judging whether the digital content is permitted to be used or not, by comparing the end-point location information stored in the end-location storing step with the use-point location information obtained by the location obtaining step; and
a final judging step of judging that the digital content is permitted to be used, only when judgment results in the management information judging step and the location judging step are both affirmative.

19. The digital content management program of Claim 18,
wherein in the end-location storing step, the end-point location information is encrypted and stored.

20. The digital content management program of Claim 18,
wherein the digital content is made up of one or more data parts, and
the use-point location information is expressed by sequence information that is given to one of the one or more data parts, the one or more data parts each being given sequence information showing a sequence from a start of the digital content.

21. The digital content management program of Claim 14, further comprising,
a random-number generating step of generating a random number and including the random number as one item of each of the first management information and the second management information.

22. The digital content management program of Claim 14, further comprising,
an identification information obtaining step of obtaining identification information for identifying the digital content,
wherein the first management information and the second management information each include the identification information.

23. The digital content management program of Claim 22, further comprising,
a hash-value comparing step of comparing a hash-value for the digital content stored in the first storing step with a hash-value included in the second management information stored in the second storing step, to judge whether the digital content is permitted to be used or not,
wherein the identification information includes a hash-value for the digital content.

24. The digital content management program of Claim 22,
wherein in the first storing step the digital content is encrypted using an encryption key before the digital content is stored, and
the identification information includes the encryption key,
the digital content management program further comprising, an encryption key comparing step of comparing the encryption key included in the identification information stored in the first storing step with the encryption key included in the identification information stored in the second storing step, to judge whether the digital content is permitted to be used or not.
